**Europäisches Patentamt**

**European Patent Office**

**Office européen des brevets**

(19)

(11) Veröffentlichungsnummer: **0 331 874 B1**

(12) # EUROPÄISCHE PATENTSCHRIFT

(45) Veröffentlichungstag der Patentschrift :
10.04.91 Patentblatt 91/15

(51) Int. Cl.⁵ : **F16B 27/00**

(21) Anmeldenummer : **89100460.8**

(22) Anmeldetag : **12.01.89**

(54) **Magazin mit mehreren Spreizdübeln.**

(30) Priorität : 07.03.88 DE 3807368

(43) Veröffentlichungstag der Anmeldung :
13.09.89 Patentblatt 89/37

(45) Bekanntmachung des Hinweises auf die
Patenterteilung :
10.04.91 Patentblatt 91/15

(84) Benannte Vertragsstaaten :
AT BE CH ES FR GB IT LI NL

(56) Entgegenhaltungen :
AT-B- 355 879
GB-A- 1 550 458
US-A- 4 167 229

(73) Patentinhaber : **fischerwerke Artur Fischer
GmbH & Co. KG
Weinhalde 14 - 18
W-7244 Waldachtal 3/Tumlingen (DE)**

(72) Erfinder : **Fischer,Artur, Prof. Dr. h. c.
Weinhalde 34
W-7244 Waldachtal 3/Tumlingen (DE)**

(74) Vertreter : **Ott, Elmar, Dipl.-Ing. et al
fischerwerke Artur Fischer GmbH & Co KG
Weinhalde 14-18
W-7244 Waldachtal 3/Tumlingen (DE)**

## Beschreibung

Die Erfindung betrifft ein Magazin mit mehreren Spreizdübeln, die jeweils einen Schaft und eine auf einen Spreizkörper aufschiebbare Spreizhülse haben.

Überlicherweise werden Spreizdübel lose verpackt und zum Einsetzen in Bohrlöcher eines Mauerwerks einzeln in die Hand genommen und in die Bohrlöcher eingesetzt. Um die Spreizhülse auf einen Spreizkonus aufzuschieben und dabei aufzuspreizen, kann am Schaft des Spreizdübels ein Schlitz oder dgl. zum Ansetzen eines Schlagschraubers vorgesehen sein. Der Spreizkörper stützt sich dabei am Bohrlochgrund ab, während durch die Drehbewegung des Schaftes dieser auf einen am Spreizkörper ausgebildeten Gewindestab geschraubt wird, wobei sich die Spreizhülse über den Spreizkonus schiebt und aufspreizt. Die Spreizhülse kann somit in eine Hinterschneidung des Bohrlochs eingreifen und eine formschlüssige Verbindung zwischen Spreizdübel und Mauerwerk herstellen.

Der Erfindung liegt die Aufgabe zugrunde, ein Magazin mit mehreren Spreizdübeln zu schaffen, welches eine Montageerleichterung ergeben soll.

Die Lösung dieser Aufgabe wird bei einem Magazin der eingangs genannten Gattung durch die im kennzeichnenden Teil des Anspruchs 1 angegebenen Merkmale erhalten. Besondere Ausführungsarten der Erfindung sind in den abhängigen Ansprüchen 2 bis 5 dargelegt. Die Spreizdübel sind in vorzugsweise aus Kunststoff gefertigten elastischen Halterungen eingespannt und mittels eines Vorsprungs, der in eine am Spreizdübel ausgebildete Ringnut eingreift, gegen unbeabsichtigtes axiales Verschieben gesichert. In einem erfindungsgemäßen Magazin können beispielsweise 10 Spreizdübel miteinander aufgereiht sein. Die Montage eines Spreizdübels erfolgt nun so, daß das Magazin so vor das Bohrloch gehalten wird, so daß der zu montierende Spreizdübel nach vorne aus dem Magazin in das Bohrloch gedrückt oder gestoßen werden kann.

Dabei genügt ein entsprechender Druck oder Schlag der am Schaft des Spreizdübels angreift, um die Rastverbindung zwischen Ringnut und Halterung zu lösen. Die Rastverbindung ist jedoch so stabil, daß benachbarte im Magazin angeordnete Spreizdübel nicht aus der Rastposition verschoben werden.

Vorzugsweise stehen die Halterungen an dem der Spreizhülse abgewandte Ende des Schaftes über. Der überstehende Teil der Halterung bildet damit eine Führungsrinne oder einen Führungsring für ein am Schaftende anzusetzendes Werkzeug, beispielsweise für einen Schlagbohrschrauber.

Das Magazin kann als einstückiges Kunststoffteil ausgebildet sein, wodurch dieses sehr kostengünstig herstellbar ist.

Die Ringnut kann durch die beiden angrenzenden Teile, nämlich durch die Spreizhülse und dem Schaft des Spreizdübels dadurch gebildet werden, daß die einander zugewandten Stirnflächen jeweils mit einer Fase versehen sind, wodurch sich eine V-förmige Ringnut ergibt. Der an den Halterungen angeformte Vorsprung kann ein entsprechendes Profil aufweisen.

Die Erfindung wird nachfolgend anhand der Zeichnung näher erläutert.

Es zeigen :

Figur 1 einen Ausschnitt der Draufsicht auf ein erfindungsgemäßes Magazin mit Spreizdübel und

Figur 2 die Seitenansicht des in Figur 1 dargestellten Magazins ohne Spreizdübel.

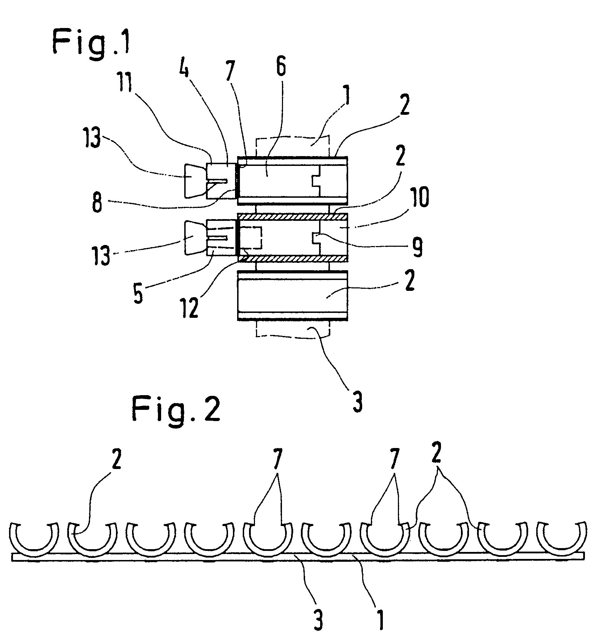

Das in Figur 1 dargestellte Magazin 1 besitzt mehrere Halterungen 2, die rinnenförmig ausgebildet sind und zusammen mit einem Verbindungssteg 3 ein einstückiges Kunststoffteil bilden. In zwei der Halterungen 2 sind Spreizdübel 4, 5 mit ihren Schaft 6 eingeklemmt. An den Halterungen 2 abstehende Vorsprünge 7 greifen in V-förmige Ringnuten 8 an dem Spreizdübel 4, 5 ein. Die Vorsprünge 7 können als Zapfen oder Rastnasen ausgebildet sein. Um eine festere Verbindung zwischen Halterung 2 und Spreizdübel 4, 5 zu erhalten, können die Vorsprünge 7 auch als Ringwulst in den Halterungen 2 abstehen.

Die im Magazin 1 eingeklemmten Spreizdübel 4, 5 besitzen an ihrem Schaftende einen Schlitz 9, in den ein Schraubendreher eines Schlagbohrschraubers einsetzbar ist. Da am Schaftende die Halterungen 2 geringfügig überstehen, bildet dieser überstehende Teil 10 eine Führung für die Spitze des Schraubendrehers.

Im dargestellten Ausführungsbeispiel befindet sich die Ringnut 8 an der Stelle, wo sich der Schaft 6 und die angrenzende Spreizhülse 11 berühren. Durch die Spreizhülse 11 greift ein Gewindebolzen 12 eines Spreizkörper 13 hindurch. Der Schaft 6 ist auf den Gewindebolzen 12 aufschraubbar, wobei sich die Spreizhülse 11 auf den Spreizkörper 13 aufschiebt. Dies erfolgt dadurch, daß der Schaft 6 in Drehung versetzt wird und sich der Spreizkörper 13 am Bohrlochgrund abstützt und nicht mitdreht.

Die Seitenansicht gemäß Figur 2 zeigt das Magazin 1 ohne Spreizdübel. Die rinnenförmigen Halterungen 2 besitzen elastische Wandungen mit angeformten Vorspüngen 7, die als Rastelemente dienen. Die rinnenförmige Ausbildung der Halterungen 2 erlaubt eine besonders einfache Herstellung als Kunststoff-Spritzgußteil.

## Ansprüche

1. Magazin mit mehreren Spreizdübeln, die jeweils einen Schaft und eine auf einen Spreizkörper aufschiebbare Spreizhülse haben, **dadurch gekennzeichnet,** daß die Spreizdübel (4, 5) in nebeneinander angeordneten rinnenförmigen, elastische Wandungen aufweisenden Halterungen (2) eingespannt sind, und daß am Spreizdübel (4, 5) eine Ringnut (8) ausgebildet ist, in die ein an den Halterungen (2) angeformter Vorsprung (7) eingreift.

2. Magazin nach Anspruch 1, **dadurch gekennzeichnet,** daß die Haltungen (2) an dem der Spreizhülse (11) abgewandten Ende des Schaftes (6) überstehen.

3. Magazin nach Anspruch 2, **dadurch gekennzeichnet,** daß der überstehende Teil (10) der Halterungen (2) zu einem Ring geschlossen ist.

4. Magazin nach einem der vorhergehenden Ansprüche, **dadurch gekennzeichnet,** daß sämtliche Halterungen (2) an ihrer der offenen Längsseite der Rinne gegenüberliegenden äußeren Unterseite über einen gemeinsamen Steg (3) zu einem einstückigen Kunststoffteil miteinander verbunden sind.

5. Magazin nach einem der vorhergehenden Ansprüche, **dadurch gekennzeichnet,** daß die Ringnut die Verbindungsstelle zwischen Spreizhülse und angrenzendem Schaft des jeweiligen Spreizdübels darstellt.

## Claims

1. A magazine with a plurality of expansible wall plugs, each of which has a shank and an expansible sleeve which can be pushed onto an expander body, characterized in that the expansible wall plugs (4, 5) are gripped in channel-shaped holders (2) having resilient walls that are arranged side by side, and on the expansible wall plugs (4, 5) there is formed an annular groove (8) in which a projection (7) integrally formed with the holders (2) engages.

2. A magazine according to claim 1, characterized in that the holders (2) project at the end of the shank (6) remote from the expansible sleeve (11).

3. A magazine according to claim 2, characterized in that the projecting part (10) of the holders (2) is closed to form a ring.

4. A magazine according to one of the preceding claims, characterized in that all holders (2) are joined together at their outer underside opposite to the open long side of the channel by a common web (3) to form a one-piece plastics part.

5. A magazine according to one of the preceding claims, characterized in that the annular groove constitutes the joining point between the expansible sleeve and the adjacent shank of the particular expansible wall plug.

## Revendications

1. Magasin distributeur comportant plusieurs chevilles à expansion, qui comprennent chacune un fût et une cheville à expansion susceptible d'être poussée sur un corps d'expansion, magasin caractérisé en ce que les douilles (4, 5) à expansion sont maintenues serrées dans des supports (2), présentant des parois élastiques en forme de rigoles et disposés les uns à côté des autres, et en ce que, sur la cheville (4, 5) à expansion est formée une rainure annulaire (8) dans laquelle pénètre une saillie (7) formée sur les supports (2).

2. Magasin distributeur selon la revendication 1, caractérisé en ce que les supports (2) dépassent à l'extrémité du fût opposée à la douille (11) d'expansion.

3. Magasin distributeur selon la revendication 2, caractérisé en ce que la partie (10) dépassante des supports (2) est fermée en formant un anneau.

4. Magasin distributeur selon l'une des revendications précédentes, caractérisé en ce que les supports (2) sont tous reliés, sur leur côté inférieur extérieur situé à l'opposé du côté longitudinal ouvert de la rigole, par une partie formant un pont (3) de liaison pour constituer ensemble une pièce de matière plastique d'un seul tenant.

5. Magasin distributeur selon une des revendications précédentes, caractérisé en ce que la rainure annulaire représente la zone de jonction, entre la douille d'expansion et le fût voisin, de chaque cheville d'expansion.

# Fig.1

# Fig.2